Europäisches Patentamt

European Patent Office

Office européen des brevets

(11) Publication number: **0 329 258**
**A1**

## EUROPEAN PATENT APPLICATION

(21) Application number: 89200395.5

(22) Date of filing: 17.02.89

(51) Int. Cl.⁴ **H02J 3/42 , F03D 9/00**

(30) Priority: 19.02.88 NL 8800426
13.12.88 NL 8803049

(43) Date of publication of application:
23.08.89 Bulletin 89/34

(84) Designated Contracting States:
BE DE ES FR GB GR IT NL SE

(71) Applicant: ELECTRO DRIVE B.V.
P.O. Box 90
NL-1500 EB Zaandam(NL)

(72) Inventor: Van der Meer, Jacobus Hermanus
Borgerdiep 10
1509 XM Zaandam(NL)

(74) Representative: de Vries, Johannes Hendrik
Fokke et al
Octrooibureau Los en Stigter B.V. P.O. Box
20052
NL-1000 HB Amsterdam(NL)

(54) **Apparatus for coupling an induction generator to ac power lines.**

(57) An apparatus for coupling an induction generator to ac power mains comprises semiconductor switching elements for connecting the induction generator to the ac power mains, a firing circuit for providing firing pulses to the semiconductor switching elements and an enabling means which provides an enabling signal to the firing circuit preferably at a predetermined rotational speed of the shaft of the induction generator below the synchronous speed. The firing circuit comprises means for forming a single firing pulse for each semiconductor switching element for each half cycle of the mains voltage, wherein the duration of each firing pulse increases from a phase angle of 180° of the corresponding phase voltage to a predetermined smaller phase angle of this phase voltage. Further an adjusting element is provided for setting the predetermined smaller phase angle where each firing pulse starts, and a current detection circuit is provided for comparing the firing pulse duration with the period during which a current flows through the corresponding semiconductor switching element. Said means includes a compensating circuit for increasing the firing pulse duration to half the cycle time of the mains voltage.

fig.2

## Apparatus for coupling an induction generator to ac power mains

The invention relates to an apparatus for coupling an induction generator to ac power mains according to the preamble of claim 1.

Induction generators or asynchronous three-phase generators mounted in wind turbines, are capable of operating either as motor or generator, depending on the rotational speed of the generator. For speeds greater than the synchronous speed of the induction generator, the generator will operate in a generating mode and provide a power output to the mains. For speeds below the synchronous speed, the generator will operate in a motoring mode and draw power from the mains. Under all circumstances a current will flow depending on the load, which current is at its nominal value at full load. The above-mentioned apparatus should provide for the coupling of the induction generator with the ac power mains in such a manner that the induction generator will operate in its motoring mode as less as possible. To this end, the firing circuit should supply firing pulses to the semiconductor switching elements just below the synchronous rotational speed in order to couple the induction generator to the ac power mains. However, the problem occurs that during accelerating of the wind turbine at exceeding the synchronous speed, the phase of the current shifts extremely quickly with respect to the voltage. The known apparatus wherein the firing circuit provides a conventional firing pulse or pulse train, cannot follow this phase shift of the current, whereby the semiconductor switching elements will not become conductive and great instabilities and mechanical loads may occur. In particular for wind velocities resulting in a rotational speed of the induction generator lying near the synchronous rotational speed, oscillations occur at decoupling the generator.

The invention aims to provide an apparatus of the above-mentioned type wherein under all circumstances it is guaranteed that the induction generator is coupled to the ac power mains without any instabilities.

To this end the apparatus according to the invention is characterized by the features of the characterizing part of claim 1.

In this manner it is obtained that under all circumstances the induction generator is coupled with and decoupled from the ac power mains, respectively, without any instabilities.

Preferably said means forms each firing pulse with a relatively high initial value and a lower value during the remaining part of the firing pulse. Thereby the gate of the semiconductor switching elements is quickly saturated, whereas for the remaining part of the firing pulse a thermal overload of the semiconductor switching elements is prevented but nevertheless it is guaranteed that they will become conductive.

The invention will be further explained by reference to the drawings in which an embodiment of the apparatus according to the invention is schematically shown.

Fig. 1 shows the connection of an induction generator to the three-phase mains.

Fig. 2 is a very simplified block diagram of an embodiment of the apparatus according to the invention.

Fig. 3 shows a diagram in which several signals are shown to explain the operation of the apparatus according to fig. 2.

Fig. 4 shows two voltage/current diagrams with a firing pulse according to the invention.

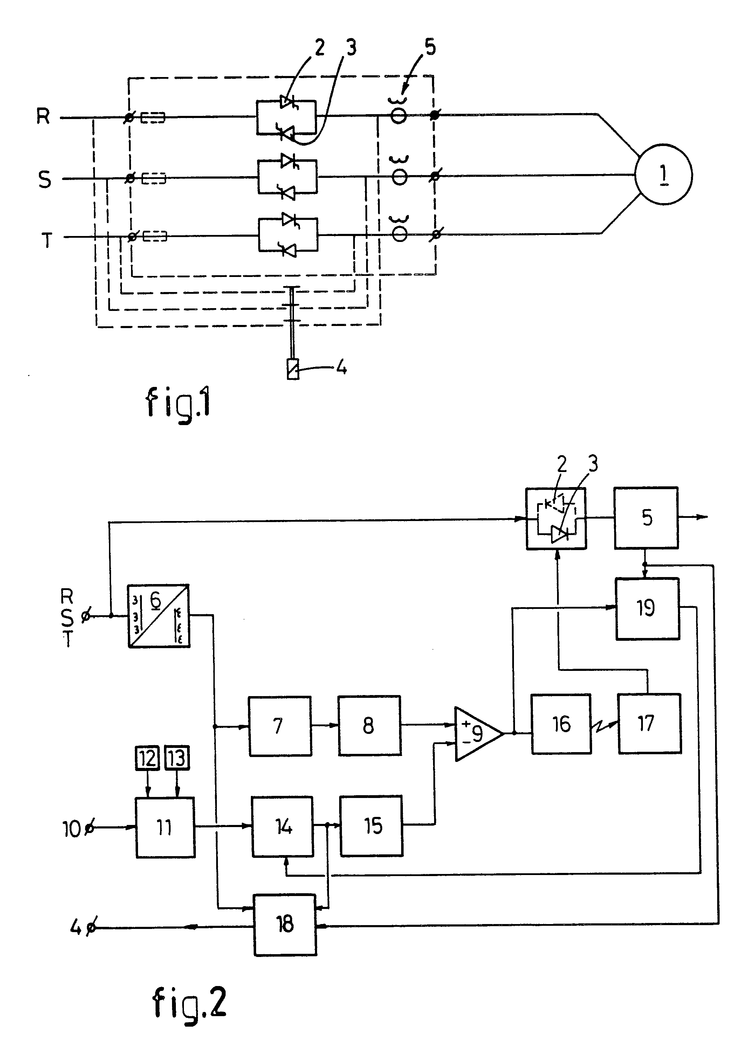

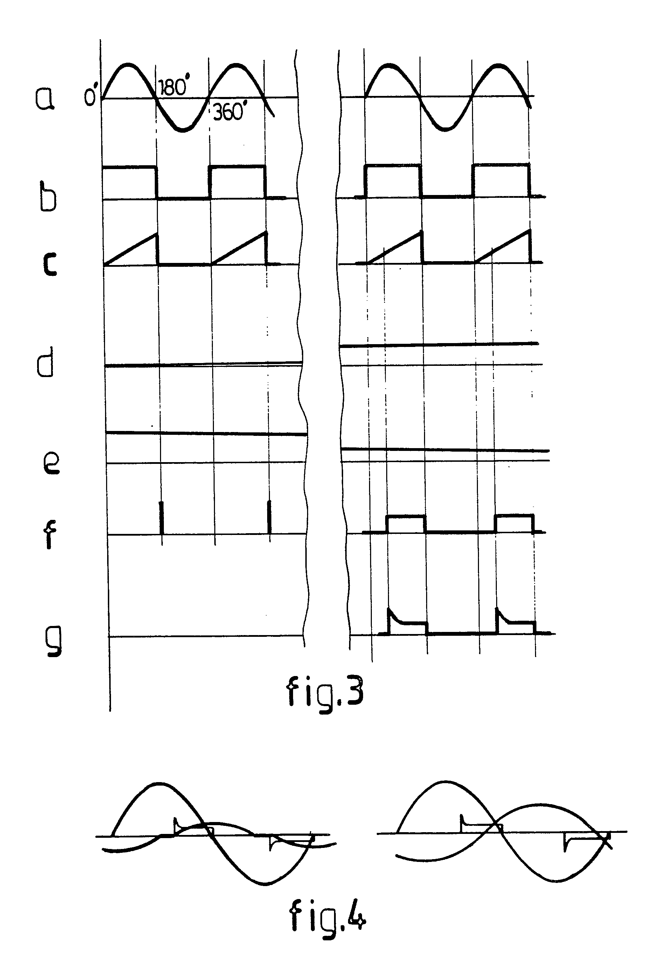

In figs. 1 and 2 there is shown a block diagram of an apparatus for coupling a three-phase induction generator 1 to a three-phase power mains, the connection lines of which are indicated by R, S, and T. The apparatus comprises for each phase two oppositely connected thyristors 2 and 3. Further each thyristor pair 2, 3 is bypassed by a contact of an electromagnetic switch unit 4 as indicated by dashed lines. Finally, a schematically indicated current transformer 5 is inserted in each phase connection of the induction generator 1. As schematically shown in fig. 2 the phase lines R, S and T are connected to transformers 6, which transform the mains voltage to a suitable low value. The apparatus described comprises a firing device for firing the different thyristors 2, 3. In order to fire the correct thyristor 2 or 3 at the correct time, a square wave signal is made by phase detectors 7 out of the coupled voltage, i.e. the voltage between the phases R, S, T. In fig. 3 a coupled voltage and the corresponding output signal of the phase detector 7 is shown at a. The output of the phase detector 7 is connected to a saw-tooth generator 8, which makes a saw-tooth signal out of the square-wave signal, which saw-tooth signal is shown in fig. 3 at c. This signal is supplied to the positive input of a comparator 9.

The firing circuit is provided with an enable input 10, to which in the described embodiment a not-shown speed detector is connected as enabling means, which speed detector enables the firing circuit by providing a positive voltage to the input 10 at a predetermined rotational speed which in any case lies just below the synchronous rotational speed of the induction generator 1. The input 10 is connected to an integrator circuit 11, the output of which therefore provides a voltage increasing in time if the input 10 is enabled, which voltage is shown in fig. 3 at d.

The integrator circuit 11 has two adjusting means 12 and 13, respectively, by means of which the maximum value of the output signal and the speed, by which this maximum value is reached, respectively, can be set. The integrator circuit 11 is connected to a compensating circuit 14, which is connected to the negative input of the comparator 9 through an invertor 15. The output signal of the invertor 15 is shown in fig. 3 at e, and the output signal of one comparator 9 at f.

The components 7, 8 and 9 are provided double for each phase, and each comparator 9 is connected to a selection circuit 16 for selecting the correct two thyristors 2 and 3. The selection circuit 16 is coupled through optocouplers not shown to pulse shapers 17 which provide for a differentiating operation so that the pulse shape as indicated in fig. 3 at g is obtained, which pulses are supplied to the gate of the thyristors 2, 3. Due to the relatively high initial value of the firing pulses a quick saturation of the gate of the thyristors 2, 3 is obtained, whereas the lower value during the remaining part of the pulse prevents a thermal overload but nevertheless guarantees that the thyristor will become conductive. The pulse shapers 17 have a power supply independent of the remaining part of the circuit described, whereby a very good galvanic separation is obtained.

As shown in fig. 4, the relatively long duration of the firing pulse results in the fact that also in case of a quick shift of the phase of the current, the current will cross zero at a moment that a firing pulse is still supplied to the thyristor so that the firing of the thyristor is guaranteed. Thereby instabilities and high mechanical loads of the wind turbine are prevented.

When the adjusting means 12 is set at an end value for the output voltage of the integrator circuit 11 corresponding with a phase angle $0°$, the thyristors are fired or made conductive from $180°$ to $0°$ in a usual manner. In this case the adjusting means 13 is set in such a manner that the rate of increase is always greater than the accelaration of the induction generator 1.

After fully coupling the induction generator 1 to the power mains, the thyristors 2, 3 are bypassed by the switch unit 4. To this end a monitoring circuit 18 is provided which monitors the output voltage of the integrator circuit 11 and when said output voltage has reached the maximum value corresponding to a firing angle of $0°$, energizes the switch unit 4.

As an alternative energizing the switch unit 4 and thereby bypassing the thyristors 2, 3 can also take place by monitoring the current through the thyristors 2, 3. To this end the current transformers 5 are also connected to the monitoring circuit 18. When the maximum allowable current through the thyristors 2, 3 is reached, the switch unit is energized after elapse of an adjustable time.

The energizing of the switch unit 4 by the monitoring circuit 18 may take place in dependence on the full firing of the thyristors 2, 3 or on maximum current through said thyristors.

During experiments with the circuit described it was found that the induction generator 1 is coupled to the ac power mains without any instabilities and unnecessary mechanical loads. The compensating circuit 14 needs not yet to be used to this end. Decoupling the induction generator 1 actually takes place through the speed switch because this switch opens at a rotational speed below the synchronous rotational speed so that the output voltage of the integrator circuit 11 decreases. The monitoring circuit 18 switches off the switch unit 4 in dependence on the adjustment made because of the decreasing current or firing angle, whereas due to the decreasing voltage on the output of the integrator circuit 11 the thyristors 2, 3 are gradually turned off.

In practice it appears that especially at decoupling at wind speeds near the synchronous rotational speed, oscillating phenomena may occur. According to the invention these oscillating phenomena can be cancelled by means of the compensating circuit 14 which is controlled by a current detection circuit 19.

The current detection circuit 19 which is provided for each phase R, S, T, is connected to the corresponding current transformer 5 on the one side and on the other side to the corresponding outputs of the comparators 9. The current detection circuit 19 compares the duration of the firing pulse with the time during which actually a current flows through the thyristors 2, 3. If the duration of the firing pulses is longer than said time, a control signal is supplied to the compensating circuit 14 whereby according to a first embodiment the pulse duration is increased to the maximum value of $0°$. Thereby the oscillating phenomena appeared to be fully eliminated. A disadvantage of this solution is that the full energizing current is supplied to the induction generator 1 so that the efficiency is somewhat decreased. According to a second embodiment the current detection circuit 19 can control the compensating circuit 14 in such a manner that the duration of the firing pulses is substantially made equal to the time during which actually a current flows through the thyristors 2, 3. Thereby the efficiency is improved, however, measures should be taken to prevent mains distortion by the "cut-off" energizing current.

When the current detection circuit 19 and the compensating circuit 14 are used, the end value for the output voltage of the integrator circuit 11 is not set on a maximum value corresponding with 0°, but for example at a maximum of 120°, so that a control range is provided for the compensating circuit 14. In this case the monitoring circuit 18 is set for monitoring a current through the thyristors 2, 3.

The apparatus described will not operate if a phase for the mains is missing. Therefore, it is required to check if all three phases are present. To this end the monitoring circuit 18 checks the presence of the three phases of the mains and the cut-out of a phase is signalled by suitable means. Further it can be prevented thereby that the thyristors 2, 3 are fired.

In addition to asymmetries in the voltage, current asymmetries may occur due to different causes. The signal of the above-mentione three current transformers 5 is rectified and averaged very accurately in the monitoring circuit 18. The peak values of minimum and maximum signal are equal to eachother in normal operation. At a failure or change of one or two of the signals minimum and maximum will be different. This is measured and signalled in a suitable manner.

Generally a thermistor stack is mounted in the induction generator 1. This temperature-sensitive resistor increases very progressively at a certain thermal value. The temperature of the generator is too high in that case. This resistance increase of the thermistor stack is monitored and signalled in a suitable manner.

Short circuiting in the generator or in the connecting lines between the described apparatus and the generator may result in a deterioration of the thyristors 2, 3. For protection very quick fuses can be provided which is indicated in fig. 1 by a dashed line.

The invention is not restricted to the above-described embodiments which can be varied in a number of ways within the scope of the invention.

**Claims**

1. Apparatus for coupling an induction generator to ac power mains, comprising semiconductor switching elements for connecting the induction generator to the ac power mains, a firing circuit for providing firing pulses to the semiconductor switching elements and an enabling means which provides an enabling signal to the firing circuit preferably at a predetermined rotational speed of the shaft of the induction generator below the synchronous speed, **characterized**in that the firing circuit comprises means for forming a single firing pulse for each semiconductor switching element for each half cycle of the mains voltage, wherein the duration of each firing pulse increases from a phase angle of 180° of the corresponding phase voltage to a predetermined smaller phase angle of this phase voltage, in that an adjusting element is provided for setting the predetermined smaller phase angle where each firing pulse starts and in that a current detection circuit is provided for comparing the firing pulse duration with the period during which a current flows through the corresponding semiconductor switching element, wherein said means includes a compensating circuit for increasing the firing pulse duration to half the cycle time of the mains voltage.

2. Apparatus according to claim 1, **characterized** in that said means forms each firing pulse with a relatively high initial value and a lower value during the remaining part of the firing pulse.

3. Apparatus according to claim 1 or 2, **characterized**in that a second adjusting element is provided for setting the speed by which the pulse duration increases.

4. Apparatus according to anyone of the preceeding claims, **characterized**in that the compensating circuit can be switched into a mode in which the firing pulse duration is decreased to a value corresponding with the period during which a current flows through the corresponding semiconductor switching element.

5. Apparatus according to anyone of the preceeding claims 1-3, **characterized**in that a monitoring circuit is provided for operating a switch unit which bypasses the semiconductor switching elements wherein the monitoring circuit closes the switch unit as soon as the firing pulse duration corresponds with half the cycle of the ac power.

6. Apparatus according to claim 4, **characterized** in that a monitoring circuit is provided for operating a switch unit which bypasses the semiconductor switching elements, wherein the monitoring circuit closes the switch unit when the current through the semiconductor switching elements exceeds a predetermined maximum value.

fig.1

fig.2

fig.3

fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8400083 (O. DRÖNEN)<br>* page 2, line 17 - page 3, line 33 *<br>* page 4, line 24 - line 34 *<br>* page 5, line 18 - line 30 *<br>* page 6, line 8 - line 13; figure 1 * | 1, 5, 6 | H02J3/42<br>F03D9/00 |
| A | US-A-4473792 (FRANK J.NOLA)<br>* column 2, line 14 - line 51 *<br>* column 4, line 61 - column 6, line 2; figures 1-6 * | 1 | |
| A | US-A-4438341 (H.WINTERBOTHAM)<br>* abstract; figures 1-4 * | 1 | |
| A | DE-A-2030223 (INSTITUT FÜR SCHIFFBAU)<br>* page 2, line 12 - line 23 *<br>* page 5, line 1 - line 26; figure 1 * | 1 | |
| A | WO-A-8203952 (O. DRÖNEN)<br>* abstract; figure 1 * | 1 | |
| A | US-A-4032834 (HANS MOGENS BEIERHOLM)<br>* abstract; figure 1 * | 2 | TECHNICAL FIELDS SEARCHED (Int. Cl.4)<br><br>H02J<br>F03D |

The present search report has been drawn up for all claims

| Place of search | Date of completion of the search | Examiner |
|---|---|---|
| THE HAGUE | 28 APRIL 1989 | HELOT H.V. |

EPO FORM 1503 03.82 (P0401)